# EUROPÄISCHE PATENTANMELDUNG

(11) **EP 1 848 237 A1**
(43) Veröffentlichungstag der Anmeldung: **24.10.2007**
(21) Anmeldenummer: 07008101.3
(22) Anmeldetag: 20.04.2007
(51) Int. Cl.: H04Q 7/38

(54) **Kommunikationssystem mit einem ersten und einem zweiten Funknetz**

(30) Priorität: 20.04.2006 DE 102006018367
(71) Anmelder: O2 (Germany) GmbH & Co. OHG, 80992 München (DE)
(72) Erfinder: Müller, Matthias, 80796 München (DE); Schmelzer, Dirk, Dr., 80637 München (DE); Schmid, Johann, 80797 München (DE)
(74) Vertreter: Thoma, Michael

(57) **Zusammenfassung**

Die Erfindung betrifft ein Kommunikationssystem mit einem ersten Funknetz, das erste Funkstationen sowie mobile Endgeräte umfasst, die dem ersten Funknetz zugeordnet sind und die geeignet sind, um mit den ersten Funkstationen über eine Luftschnittstelle zu kommunizieren, sowie mit wenigstens einem zweiten Funknetz, das zweite Funkstationen umfasst, wobei es sich bei dem ersten Funknetz um das Heimatfunknetz (Heimatnetz) handelt, deren Kunden Nutzer der mobilen Endgeräte sind, und wobei es sich bei dem zweiten Funknetz um ein fremdes Funknetz (Fremdnetz) handelt, wobei die mobilen Endgeräte geeignet sind, um mit den zweiten Funkstationen des zweiten Funknetzes zu kommunizieren. Das Kommunikationssystem ist dadurch gekennzeichnet, dass in dem von dem zweiten Funknetz abgedeckten Gesamtgebiet wenigstens bereichsweise zumindest ein Teilnehmergebiet existiert, in dem ein mobiles Endgerät zu anderen Konditionen und/oder unter Nutzung anderer Dienste betreibbar ist, als wenn es sich in dem von dem zweiten Funknetz abgedeckten Gesamtgebiet außerhalb des Teilnehmergebietes befindet.

## Beschreibung

Die Erfindung betrifft ein Kommunikationssystem mit einem ersten Funknetz, das erste Funkstationen sowie mobile Endgeräte umfasst, die dem ersten Funknetz zugeordnet sind und die geeignet sind, um mit den ersten Funkstationen über eine Luftschnittstelle zu kommunizieren, sowie mit wenigstens einem zweiten Funknetz, das zweite Funkstationen umfasst, wobei es sich bei dem ersten Funknetz um das Heimatfunknetz (Heimatnetz) handelt, deren Kunden Nutzer der mobilen Endgeräte sind, und wobei es sich bei dem zweiten Funknetz um ein fremdes Funknetz (Fremdnetz) handelt, wobei die mobilen Endgeräte geeignet sind, um auch mit den zweiten Funkstationen des zweiten Funknetzes über eine Luftschnittstelle zu kommunizieren.

Ein derartiges Kommunikationssystem mit einem ersten und einem zweiten Funknetz ist aus dem Stand der Technik bekannt. Will der Betreiber des Heimatnetzes seinen Kunden die Möglichkeit eröffnen, auch außerhalb des von den ersten Funkstationen des Heimatnetzes abgedeckten Gesamtgebietes das mobile Endgerät zu nutzen, kann er mit Betreibern anderer Funknetze, die im Folgenden als Fremdnetze bezeichnet werden, sogenannte Roaming-Abkommen schließen, die es den Kunden des Betreibers des Heimatnetzes ermöglichen, ihre mobilen Endgeräte auch in dem oder den Fremdnetzen zu nutzen.

Handelt es sich bei dem Heimatnetz um ein im Inland befindliches Mobilfunknetz und erstreckt sich die Netzabdeckung des Fremdnetzes ebenfalls auf das Inland, spricht man von National Roaming. Sofern sich das Fremdnetz im Ausland befindet, der Kunde des ersten Funknetzes sein mobiles Endgerät also auch im Ausland nutzen kann, spricht man von International Roaming.

Der vorliegenden Erfindung liegt die Aufgabe zugrunde, ein Kommunikationssystem der eingangs genannten Art dahingehend weiterzubilden, dass es gegenüber vorbekannten Kommunikationssystemen für die Kunden des Betreibers des Heimatnetzes flexibler und attraktiver ausgestaltet ist.

Diese Aufgabe wird durch ein Kommunikationssystem mit den Merkmalen des Anspruchs 1 gelöst. Danach ist vorgesehen, dass in dem von dem Fremdnetz abgedeckten Gesamtgebiet wenigstens teilweise zumindest ein Teilnehmergebiet existiert, in dem das dem Heimatnetz zugeordnete mobile Endgerät zu anderen Konditionen betreibbar ist, als wenn es sich in dem von dem Fremdnetz abgedeckten Gesamtgebiet, jedoch außerhalb des Teilnehmergebietes befindet. Von der Erfindung ist ebenfalls der Fall umfasst, dass das Teilnehmergebiet dem von dem Fremdnetz abgedeckten Gesamtgebiet entspricht, dass also das gesamte von dem Fremdnetz abgedeckte Gesamtgebiet das Teilnehmergebiet darstellt. Der vorliegenden Erfindung liegt somit der Gedanke zugrunde, für Kunden des Heimatnetzes ein Teilnehmergebiet einzurichten, das vollständig oder zumindest teilweise in dem von dem Fremdnetz abgedeckten Bereich liegt bzw. diesen abdeckt, und in dem die Kunden des Heimatnetzes ihr mobiles Endgerät zu anderen Konditionen und/oder betreiben können, als wenn sie sich außerhalb des von dem zweiten Funknetz abgedeckten Gesamtgebietes oder zwar in dem von dem zweiten Funknetz abgedeckten Gesamtgebiet, jedoch außerhalb des darin befindlichen Teilnehmergebietes befinden. Denkbar ist beispielsweise, dass ein nationaler Netzbetreiber seinen Kunden im Bereich eines im Ausland liegenden Urlaubsortes ein Teilnehmergebiet einrichtet, in dem er günstiger telefonieren kann oder andere oder zusätzliche Dienstleistungen in Anspruch nehmen kann, als in anderen Gebieten dieses Landes.

Der Begriff "andere Konditionen", zu denen das mobile Endgerät betreibbar ist, ist allgemein zu verstehen und umfasst nicht etwa nur die Möglichkeit, andere Tarife anbieten zu können. Unter dem Begriff "andere Dienste" sind beliebige Dienste zu verstehen, die der Nutzer bei Aufenthalt in dem Teilnehmergebiet in Anspruch nehmen kann. Es kann sich beispielsweise um zusätzliche, erweiterte, modifizierte etc. Dienste oder Servicedienstleistungen handeln.

Diese anderen Konditionen oder Dienste können von dem Betreiber des Heimatnetzes, des Fremdnetzes oder von einem Dritten erbracht bzw. bereitgestellt werden.

Bei dem ersten und/oder bei dem zweiten Funknetz kann es sich beispielsweise um ein Mobilfunknetz oder um ein WLAN oder auch um ein beliebiges anderes Funknetz handeln. Denkbar ist beispielsweise, dass es sich bei dem Heimatnetz sowie bei dem Fremdnetz um Mobilfunknetze handelt. Denkbar ist beispielsweise ebenfalls, dass es sich bei dem Heimatnetz um ein Mobilfunknetz und bei dem Fremdnetz um ein WLAN handelt.

Grundsätzlich besteht die Möglichkeit, dass das Teilnehmergebiet eine Teilfläche des von dem Fremdnetz abgedeckten Gesamtgebietes bildet. Ebenfalls von der Erfindung umfasst ist der Fall, dass das Teilnehmergebiet dem von dem Fremdnetz abgedeckten Gesamtgebiet entspricht. Letzteres kann z.B. dann der Fall sein, wenn es sich bei dem Fremdnetz um ein WLAN handelt, das innerhalb oder außerhalb des Heimatnetzes angeordnet sein kann und in dem der Nutzer sein mobiles Endgerät zu anderen Konditionen und/oder mit anderen Diensten betreiben kann, als außerhalb des von dem WLAN abgedeckten Bereiches. Von der Erfindung ist ferner der Fall umfasst, dass ein Betreiber meherere WLAN Hotspots bereitstellt, wodurch mehrere ggf. räumlich verteilte Teilnehmergebiete gebildet werden. Denkbar ist beispielsweise, dass ein Betreiber einer Restaurant-Kette in seinen Restaurants WLAN Hotspots installiert und dass die mobilen Endgeräte in dem WLAN kommunizieren, sobald sie sich in dem von dem WLAN abgedeckten Bereich befinden.

Das von dem zweiten Funknetz abgedeckte Gesamtgebiet kann teilweise oder vollständig innerhalb oder außerhalb des von dem Heimatnetz abgedeckten Gesamtgebietes liegen. Denkbar ist ferner, dass das von dem zweiten Funknetz abgedeckte Gesamtgebiet an das von dem Heimatnetz abgedeckte Gebiet angrenzt oder dass die beiden Gebiete keine Berührungspunkte haben.

Grundsätzlich ist denkbar, dass sich das von dem Fremdnetz abgedeckte Gesamtgebiet in demselben oder in einem anderen Staat befindet, wie/als das von dem Heimatnetz abgedeckte Gesamtgebiet. Die Erfindung ist also nicht darauf beschränkt, dass sich das Teilnehmergebiet im Ausland befindet. Ebenso ist es denkbar, dass sich das Teilnehmergebiet im Inland befindet, und zwar in einem Bereich, der zumindest teilweise von einem oder mehreren Fremdnetzen abgedeckt wird. Denkbar ist der Fall, dass das Heimatnetz in bestimmten Gebieten keine oder keine hinreichende Netzabdeckung bietet und für diese Gebiete die mobilen Endgeräte der Kunden des Heimatnetzes über ein Roaming-Abkommen in einem Fremdnetz betreibbar sind und dass in diesem Fremdnetz ein Teilnehmergebiet für Kunden des Heimatnetzes eingerichtet wird.

Denkbar und von der Erfindung umfasst ist insbesondere auch, dass die Einrichtung der Teilnehmergebiete von vornherein zeitlich befristet ist, d. h. dass das Kommunikationssystem Mittel aufweist, die nach Ablauf einer bestimmten Zeitspanne oder auf Aufforderung durch einen Bediener des Systems die Einrichtung des Teilnehmergebietes aufhebt. Auf diese Weise ist es möglich, dass beispielsweise nur für die Dauer eines Urlaubes oder eines längeren geschäftlichen Aufenthaltes Teilnehmergebiete in Fremdnetzen eingerichtet werden.

Selbstverständlich ist von der Erfindung auch der Fall umfasst, dass die Einrichtung eines Teilnehmergebietes dauerhaft, also nicht von vornherein zeitlich befristet erfolgt.

Das oder die Teilnehmergebiete können teilnehmerindividuell, also auf einen einzelnen Teilnehmer abgestimmt oder für eine größere Gruppe von Teilnehmern, wie beispielsweise die Nutzer eines bestimmten Tarifs oder für alle Kunden des Heimatnetzbetreibers eingerichtet sein. Denkbar ist auch, vorgegebene Teilnehmergebiete, wie z.B. die Bereiche europäischer Hauptstädte, bereitzustellen bzw. anzubieten.

In weiterer Ausgestaltung der Erfindung ist vorgesehen, dass das Fremdnetz Funkzellen enthält und dass das Kommunikationssystem einen Topographie-DatenSpeicher umfasst, in dem eine Verknüpfung zwischen einer Ortsangabe in dem von dem Fremdnetz oder Heimatnetz abgedeckten Gesamtgebiet und der Kennung einer oder mehrerer Funkzellen des Fremdnetzes (gegebenenfalls zusätzlich des Heimatnetzes) oder eines Funkzellen-Bündels enthalten ist, das Funkzellen des Fremdnetzes (gegebenenfalls zusätzlich des Heimatnetzes) umfasst.

Der Begriff "Funkzellen" ist im Rahmen dieser Erfindung sehr allgemein zu verstehen und soll nicht nur "klassische" Funkzellen eines eine Zellenstruktur aufweisenden Mobilfunknetzes, sondern jedes beliebige identifizierbare Gebiet innerhalb eines Gesamtgebietes umfassen. Auch ist der Begriff des "Funkzellen-Bündels" sehr allgemein zu verstehen und kann jede beliebige Gruppierung von Funkzellen oder sonstigen Gebieten umfassen. Darunter kann beispielsweise auch eine sogenannte Location Area verstanden werden, bei der es sich um ein von Funkzellen abgedecktes Gebiet handelt.

Der Begriff "Ortsangabe" ist ebenfalls sehr allgemein zu verstehen und ist nicht etwa auf die Angabe einer Adresse beschränkt. Eine Ortsangabe/Lage ist jede beliebige Information, die Rückschlüsse auf die geographische Anordnung eines Gebietes oder Ortes zulässt. Es kann sich beispielsweise um eine postalische Adresse, Koordinaten, eine Vorwahl, eine Landeskennziffer, eine Postleitzahl etc. handeln.

Die Verwendung des Begriffes "Fremdnetz" beinhaltet keine Beschränkung auf nur ein Fremdnetz, sondern soll auch den Fall umfassen, dass mehrere Fremdnetze beteiligt sind.

Der Topographiedaten-Speicher beinhaltet eine Verknüpfung einer beliebigen Ortsangabe, wie beispielsweise einer postalischen Adresse, Koordinaten, dem Land (Inland, Ausland) und der Kennung einer oder mehrerer Funkzellen des Fremdnetzes oder eines Funkzellenbündels. Der Speicher kann von dem Betreiber des Heimatnetzes, des Fremdnetzes oder einem Dritten betrieben werden. Denkbar ist auch der Fall, dass das Teilnehmergebiet teilweise auch in dem Heimatnetz oder in zwei oder mehr unterschiedlichen Fremdnetzen liegt. In diesem Fall enthält der Topographiedaten-Speicher eine Verknüpfung von den Zellen oder Gebieten des Heimatnetzes und des oder der Fremdnetze und der Ortsangabe. Wesentlich ist, dass eine eindeutige Zuordnung zwischen der geographischen Ortsangabe und der Zellenverteilung z.B. im entsprechenden Fremdnetz in dem Topographiedaten-Speicher abgelegt ist.

Bei dem Topographiedaten-Speicher kann es sich um einen Server handeln, auf den durch den Betreiber des Heimatnetzes und/oder durch den Betreiber des Fremdnetzes zugreifbar ist.

Bei dem Zugriff kann es sich beispielsweise um einen Lese- und/oder Schreibzugriff handeln.

Denkbar ist beispielsweise, dass der Kunde beim Betreiber des Heimatnetzes eine Adresse (z.B. postalisch, Koordinaten; Inland, Ausland) angibt, woraufhin dieser Adresse vom Betreiber des Heimatnetzes Zellenkennungen des Fremdnetzes zugeordnet werden können. In diesem Fall ist denkbar, dass der Betreiber des Fremdnetzes auf den genannten Speicher/Server zugreift und auf diese Weise auf die eindeutige Zuordnung zwischen der geographischen Angabe und den Zellenkennungen der Zellen zugreifen kann, die das Teilnehmergebiet definieren. Denkbar ist ferner, dass die Kennungen der das Teilnehmergebiet bildenden Funkzellen von dem Betreiber des Heimatnetzes an das mobile Endgerät über eine Luftschnittstelle zur dortigen Abspeicherung übermittelt werden.

Das genannte Bündel von Funkzellen, das Funkzellen des Fremdnetzes umfasst, kann durch den Betreiber des Heimatnetzes oder den Betreiber des Fremdnetzes vorgegeben sein. Denkbar ist somit, dass der Kunde ein von dem Betreiber des Heimatnetzes fest vorgegebenes Zellenbündel auswählt, das aus mindestens einer Funkzelle besteht. Diese Auswahl kann durch Interaktion mit dem Betreiber des Heimatnetzes (z. B. per Internet, WAP, USSD, SMS, Customer Service, Shop) erfolgen. Vorteilhaft ist eine geeignete Visualisierung (Web-Page, Pdf-File) der Zuordnung des Bündels und der entsprechenden geographischen Angabe. Denkbar ist auch, die Anzeige auf dem mobilen Endgerät mittels WAP oder java-Applets durchzuführen.

In weiterer Ausgestaltung ist vorgesehen, dass das Fremdnetz Funkzellen enthält und dass das Kommunikationssystem einen Nutzerdaten-Speicher umfasst, in dem Kennungen der das Teilnehmergebiet definierenden Funkzellen sowie Daten gespeichert sind, die das mobile Endgerät identifizieren, für das das Teilnehmergebiet eingerichtet wurde. Dieser Nutzerdaten-Speicher enthält somit eine Verknüpfung zwischen Identifikationsdaten des mobilen Endgerätes und Identifikationsdaten des für dieses eingerichteten Teilnehmergebietes.

Der Nutzerdaten-Speicher kann auch Nutzerprofile enthalten, die beispielsweise die Bereitstellung von Diensten bzw. Zusatzdiensten oder Konditionen durch den Betreiber des Fremdnetzes und/oder des Heimatnetzes und/oder durch einen beliebigen Dritten ermöglichen.

Wie oben ausgeführt, ist der Begriff der Funkzellen sehr weit auszulegen und kann auch die Kennung (z.B. die SSID) eines WLAN umfassen. In diesem Fall enthält die Nutzerdatenbank die Information, welcher Nutzer bzw. welches mobile Endgerät in dem WLAN betreibbar bzw. unter besonderen Konditionen und/oder unter Inanspruchnahme besonderer Dienste in dem WLAN nutzbar ist.

Der Topographiedaten-Speicher und/oder der Nutzerdaten-Speicher kann vom Betreiber des Heimatnetzes und/oder von dem Betreiber des Fremdnetzes lesbar und/oder beschreibbar sein. Denkbar ist, dass beide Speicher durch ein und dieselbe Einheit gebildet werden, die z.B. als Server ausgeführt sein kann. Vorgesehen sein kann, dass der Betreiber des Heimatnetzes auf den oder die Speicher bzw. Server nur im Lesezugriff und der Betreiber des Fremdnetzes sowohl im Leseals auch im Schreibzugriff zugreifen kann.

Denkbar ist beispielsweise, dass der Kunde des Heimatnetzes beim Betreiber des Fremdnetzes eine Adresse (postalisch, Koordinaten; Inland, Ausland) angibt und daraufhin vom Betreiber des Fremdnetzes die dazugehörigen Zellen sowie die eindeutigen ldentifizierungsdaten des Endgerätes (z. B. MSISDN, IMSI, IP-Adresse) im Nutzerdaten-Speicher, der als Server ausgeführt sein kann, abgelegt werden.

Wie oben ausgeführt, kann es sich bei diesem Nutzerdaten-Speicher und bei dem Topographiedaten-Speicher um ein und dieselbe Einheit handeln.

Denkbar ist, dass der Speicher bzw. Server gemeinsam von dem Betreiber des Heimatnetzes sowie von dem Betreiber des Fremdnetzes genutzt werden.

Sobald der Betreiber des Fremdnetzes auf dem Nutzerdaten-Speicher die genannten Daten abgelegt hat, kann vorgesehen sein, dass dies dem Betreiber des Heimatnetzes angezeigt wird.

Die das Teilnehmergebiet definierenden Kennungen der Funkzellen werden in bevorzugter Ausgestaltung der Erfindung von dem Betreiber des Heimatnetzes dem Endgerät über eine Luftschnittstelle zur dortigen Abspeicherung übermittelt. Grundsätzlich ist auch eine Übermittlung per IP denkbar.

Denkbar ist ferner, dass der Kunde ein von dem Betreiber des Fremdnetzes fest vorgegebenes Zellenbündel auswählt, das aus mindestens einer Funkzelle besteht. Die Auswahl erfolgt durch Interaktion mit dem Betreiber des Heimatnetzes (z. B. per Internet, WAP, USSD, SMS, Customer Service, Shop). Auch hierfür ist es vorteilhaft, wenn eine geeignete Visualisierung (z. B. Web-Page, Pdf-File) der Zuordnung des Bündels und der entsprechenden geographischen Angaben gegeben ist. Die Kennungen der Funkzellen des Teilnehmergebietes werden gemeinsam mit den eindeutigen Identifizierungsdaten des Endgerätes (z. B. MSISDN, IMSI, IP-Adresse) von dem Betreiber des Fremdnetzes auf dem Nutzerdaten-Speicher abgelegt, der vorzugsweise sowohl vom Betreiber des Fremdnetzes als auch vom Betreiber des Heimatnetzes genutzt wird. Es ist vorteilhaft, diese Ablage dem Betreiber des Heimatnetzes anzuzeigen. Die Kennungen der Funkzellen, die die Zone bilden, werden auch bei dieser Ausgestaltung der Erfindung vorzugsweise dem Endgerät vom Betreiber des Heimatnetzes über einen Luftschnittstelle zur dortigen Abspeicherung übermittelt.

In einer weiteren Ausgestaltung der vorliegenden Erfindung ist vorgesehen, dass das Fremdnetz Funkzellen enthält und dass Mittel zur Festlegung des Teilnehmergebietes vorgesehen sind, die derart ausgeführt sind, dass während des Aufenthaltes des mobilen Endgerätes in dem durch das Fremdnetz abgedeckten Gesamtgebiet durch das mobile Endgerät Kennungen von Funkzellen des Fremdnetzes empfangen werden und dass das Teilnehmergebiet durch diese empfangenen Kennungen definiert wird. Die Festlegung des Teilnehmergebietes im entsprechenden Fremdnetz kann somit auf der Grundlage der von dem Endgerät erkannten Kennungen der Funkzellen erfolgen.

Unter dem Begriff "Endgerät" ist im Rahmen dieser Erfindung das Gerät selbst und/oder das in diesem befindliche Modul (z. B. SIM-Karte) zu verstehen. Eine Speicherung von Daten kann somit beispielsweise in einem geräteseitigen Speicher und/oder in einem Speicher des Moduls erfolgen.

In dieser Ausgestaltung der Erfindung ist vorzugsweise vorgesehen, dass im Zuge der Aktivierung, d. h. der Einrichtung des Teilnehmergebietes die Anzahl der abzuspeichernden Zellenkennungen und/oder die Ausdehnung des Teilnehmergebietes, das durch zusammenhängende Zellen gebildet wird, dem Endgerät durch die Vermittlungseinheit des Betreibers des Heimatnetzes mitgeteilt wird.

Des Weiteren kann vorgesehen sein, dass während des Aufenthaltes des mobilen Endgerätes in dem festzulegenden Teilnehmergebiet im Fremdnetz Zellenkennungen durch das Endgerät oder durch das Fremdnetz übermittelt werden. Dazu muß über das Endgerät ein Übermittlungsprozeß ausgelöst werden (beispielsweise per Call Origination/IVR oder USSD). Auch hierbei ist vorteilhaft, wenn die übermittelten abzuspeichernden Zellenkennungen und/oder die Ausdehnung des Teilnehmergebietes, das durch zusammenhängende Zellen gebildet wird, dem Fremdnetz und dem Heimatnetz mitgeteilt wird und die übermittelten Daten eindeutig im gesamten Fremdnetz zuordenbar sind.

In weiterer Ausgestaltung der Erfindung ist vorgesehen, dass das Kommunikationssystem Mittel aufweist, durch die dem Nutzer eines mobilen Endgerätes angezeigt wird, wenn sich das mobile Endgerät innerhalb oder außerhalb des Teilnehmergebietes befindet. Grundsätzlich sind beliebige Anzeigemittel, wie akustische und/oder visuelle Indikatoren denkbar. Die Anzeige kann von dem Heimatnetz (beispielsweise SIM-Applikationen, Nutzung von CAMEL) oder vom Fremdnetz (beispielsweise Cell Broadcast, Nutzung von CAMEL) ausgehen. Grundsätzlich ist denkbar, dass im Endgerät selbst ein Prüfalgorithmus vorgesehen ist, der die Zugehörigkeit zu dem Teilnehmergebiet prüft und dann je nach Ergebnis eine entsprechende Anzeige generiert.

In bevorzugter Ausgestaltung der Erfindung ist vorgesehen, dass die Kennungen der Funkzellen, die das Teilnehmergebiet bilden, der zentralen Vermittlungseinheit des Betreibers des Heimatnetzes und/oder der zentralen Vermittlungseinheit des Betreibers des Fremdnetzes über geeignete Schnittstellen (z. B. USSD, Nutzung von CAMEL, IP-Signalisierung) bekannt gemacht werden.

In weiterer Ausgestaltung der Erfindung ist vorgesehen, dass Mittel vorgesehen sind, die bei Änderung des Inhalts des Topographiedaten-Speichers eine entsprechende Aktualisierung des Nutzerdaten-Speichers und/oder des im mobilen Endgerät vorhandenen Nutzerdaten-Speichers vornehmen, für das ein Teilnehmergebiet eingerichtet ist, das von der Änderung betroffen ist. Vorzugsweise ist vorgesehen, dass der Betreiber des Fremdnetzes die in einem gemeinsamen nutzbaren Speicher enthaltene Zuordnung zwischen geographischer Angabe und Zellenkennung über eine geeignete Schnittstelle aktualisiert. Eine erfolgreiche Aktualisierung kann automatisiert dem Betreiber des Heimatnetzes, vorzugsweise dessen zentraler Vermittlungseinheit angezeigt werden. Bei Bedarf kann der Betreiber des Heimatnetzes daraufhin die in dem Endgerät gespeicherten Zellenkennungen aktualisieren, damit auch im Endgerät eine aktuelle Fassung der das Teilnehmergebiet definierenden Funkzellenkennungen vorliegt.

Gemäß einer bevorzugten Ausgestaltung der Erfindung umfasst das Kommunikationssystem Mittel zur Erstellung von Abrechnungsdatensätzen, die in dem Heimatnetz oder in dem Fremdnetz angeordnet sind.

Denkbar ist, dass Mittel vorgesehen sind, mittels derer das Heimatnetz von dem Fremdnetz die Mitteilung der Funkzelle(n) erhält, in der sich der Nutzer des mobilen Endgerätes bei Gesprächsaufbau oder zu einem beliebigen anderen Zeitpunkt des Gespräches aufgehalten hat.

Denkbar ist ferner, dass Mittel vorgesehen sind, mittels derer das Fremdnetz Abrechnungsdatensätze erstellt und diesen einen Zusatz hinzufügt, der anzeigt, ob sich der Nutzer des mobilen Endgerätes bei Gesprächsaufbau oder zu einem Zeitpunkt des Gespräches in dem Teilnehmergebiet des Fremdnetzes aufgehalten hat, das für das mobile Endgerät eingerichtet wurde.

Ferner ist denkbar, dass Mittel vorgesehen sind, mittels derer das Fremdnetz Abrechnungsdatensätze erstellt und diesen einen Zusatz hinzufügt, der die Kennung der Funkzelle(n), in der sich der Nutzer des mobilen Endgerätes zu einem Zeitpunkt des Gesprächs oder bei Gesprächsaufbau aufgehalten hat.

Erhält das Heimatnetz von dem Fremdnetz Kennungen der Funkzellen, in denen sich der Nutzer des mobilen Endgerätes zu einem Zeitpunkt des Gespräches oder bei Gesprächsaufbau aufgehalten hat, ist es erforderlich, dass Prüfmittel vorgesehen sind, mittels derer prüfbar ist, ob die Funkzelle(n), in denen sich der Nutzer des mobilen Endgerätes bei Gesprächsaufbau oder zu einem beliebigen anderen Zeitpunkt des Gespräches aufgehalten hat, in das für dieses mobile Endgerät gespeicherten Teilnehmergebiet fällt.

Insgesamt ist somit denkbar, dass für mit besonderen Tarifen oder sonstigem Service versehene Diensteinanspruchnahmen (z. B. Call Origination, Call Termination, SMS Origination) der Betreiber des Fremdnetzes entweder die entsprechenden Abrechnungsdatensätze (z. B. CDR) mit einem Zusatz versieht, der als Ausgangsort des Gespräches das Teilnehmergebiet kennzeichnet, sollte sich das Endgerät zum Zeitpunkt des Aufbaus der Inanspruchnahme, d. h. z. B. bei Gesprächsaufbau, innerhalb des Teilnehmergebietes aufgehalten haben. Denkbar ist ferner, dass der Betreiber des Fremdnetzes nur die Zellenkennung der Funkzelle, aus der die Inanspruchnahme gestartet wurde, dem Abrechnungsdatensatz oder der Initialisierungssignalisierung (z. B. CAMEL) anfügt. In diesem Fall prüfen die genannten Prüfmittel vorzugsweise der Tarfiberechnungseinheit des Betreibers des Heimatnetzes, ob die mitgelieferte Zellenkennung einer als Teilnehmergebiet deklarierten Kennung entspricht. Mit CAMEL und anderen Technologien kann auch eine Tarifierung durch das Fremdnetz und eine Abbuchung vom Heimatkonto vorgenommen werden. Die Abrechnung kann somit vom Fremdnetz durchgeführt werden. Falls die Kennungen übereinstimmen bzw. falls der Abrechnungsdatensatz des Betreibers des Fremdnetzes einen entsprechenden Zusatz enthält, kommt der besondere Tarif oder die besondere Dienstleistung zur Anwendung.

Für eine mit einem gesonderten Tarif versehene Terminierung kann der Betreiber des Fremdnetzes beim Aufbau der Verbindung über geeignete Signalisierungskanäle an den Betreiber des Heimatnetzes, vorzugsweise an dessen zentrale Vermittlungseinheit, die Zellenkennung der Zelle bekannt machen, in der sich das mobile Endgerät zu dieser Zeit befindet.

Die hier beispielhaft aufgeführte Vergebührung kann sich daran orientieren, wo das Gespräch begonnen wurde und/oder davon abhängig sein, wo sich der Nutzer während des Gesprächs aufhält.

In weiterer Ausgestaltung der Erfindung ist vorgesehen, dass sich das Teilnehmergebiet vollständig in dem von dem Fremdnetz abgedeckten Gesamtgebiet oder teilweise in diesem und teilweise in dem von dem Heimatnetz und/oder einem weiteren Fremdnetz abgedeckten Gesamtgebiet befindet.

Durch den Zugriff auf die Kennungen der Funkzellen und die Netztopographie des Fremdnetzes, die vorzugsweise auf einem gemeinsam nutzbaren Server abgelegt sind, kann ein Teilnehmergebiet gebildet werden, dass sowohl Zellen des Heimatnetzes als auch Zellen des Fremdnetzes beinhaltet. Mittels der Kennzeichnung (Zelleninformation bzw. "Teilnehmergebiet") der Diensteinanspruchnahme aus dem Teilnehmergebiet des Betreibers des Fremdnetzes durch den Betreiber des Fremdnetzes und der Auswertung durch die zentrale Vermittlungseinheit des Betreibers des Heimatnetzes kommt beim Betreiber des Heimatnetzes der besondere Tarif oder der besondere Service zur Anwendung.

Weiterhin kann vorgesehen sein, dass für wenigstens einen Nutzer des Kommunikationssystems mehrere Teilnehmergebiete definiert sind, in denen das mobile Endgerät zu anderen Konditionen betreibbar ist als außerhalb des jeweiligen Teilnehmergebietes und dass eine Priorisierung für sich überschneidende Teilnehmergebiete definiert oder für den Fall definiert ist, dass sich ein Teilnehmergebiet mit einem Nicht-Teilnehmergebiet überschneidet.

Denkbar ist beispielsweise, dass die Priorität eines Teilnehmergebietes im Inland wahlweise höher oder niedriger ist als die Priorität eines "Nicht-Teilnehmergebietes" im Inland. Denkbar ist ferner, dass diese Prioritäten vom Kunden dynamisch gewählt werden können. Befindet sich der Kunde beispielsweise in einem Gebiet, in dem sowohl WLAN als auch GSM verfügbar sind, kann vorgesehen sein, dass der Kunde ein Netz auswählen kann.

Denkbar ist ferner, dass die Priorität eines Teilnehmergebietes im Inland wahlweise höher oder niedriger ist als die Priorität eines Teilnehmergebietes im Ausland.

Denkbar ist ferner, dass die Priorität eines "Nicht-Teilnehmergebietes" im Inland wahlweise höher oder niedriger ist als die Priorität eines Teilnehmergebietes im Ausland.

Weitere Einzelheiten und Vorteile der Erfindung gehen aus dem im Folgenden erläuterten Ausführungsbeispiel hervor.

In einer möglichen Ausgestaltung der Erfindung ist vorgesehen, dass in einem Topographiedaten-Server des Fremdnetzes eine eindeutige Zellenzuordnung zu postalischen Adressen, Koordinaten, Gebieten usw. durch das Fremdnetz abgelegt ist. Auf diesem Server können Zugriffsrechte für den Betreiber des Heimatnetzes bestehen. Denkbar ist, dass eine Logik zur sofortigen Mitteilung und Übermittlung bei geänderten Inhalten vorgesehen ist, d.h. sobald sich die Verknüpfung von Zellenkennung und Ortsangabe ändert, kann vorgesehen sein, dass dies dem Heimatnetz und/oder dem mobilen Endgerät mitgeteilt wird und dass ein Update des Topographiedaten- Speichers und des Nutzerdaten-Speichers erfolgt.

In einem ersten Schritt wird das Teilnehmergebiet festgelegt, was durch Aufenthalt des mobilen Endgerätes in dem Fremdnetz durch interaktive Festlegung erfolgen kann (beispielsweise per SMS, www, WAP, IVR, Customer Service, USSD).

Denkbar ist auch, dass zum Zwecke der Festlegung des Teilnehmergebietes weder der Aufenthalt im Fremdnetz noch im Heimatnetz erforderlich ist. In diesem Fall erfolgt die Einrichtung beispielsweise per SMS, www, WAP, IVR, Customer Service, Shop, USSD. lm Rahmen dieses Ausführungsbeispiels wird in dem Heimatnetz und gegebenenfalls in dem Fremdnetz die Zellenkennung des festgelegten Teilnehmergebietes gespeichert. Die Zellenkennung wird je nach Ausführung auf das Endgerät übertragen.

Befindet sich der Kunde in einem Teilnehmergebiet, kann ihm dies angezeigt werden. Denkbar ist eine optische Anzeige des Teilnehmergebietes im Display im Ruhezustand (Idle Mode). Die Anzeige kann durch das mobile Endgerät selbst oder durch das Heimat- oder das Fremdnetz ausgelöst werden. Die Anzeige könnte auch durch ein anderes Medium, wie z.B. ein Fernsehgerät, vorgenommen werden, was beispielsweise dann der Fall sein kann, wenn das mobile Endgerät lediglich der Authentifizierung und Abrechnung dient.

Auch ist denkbar, eine akustische Anzeige des Teilnehmergebietes beim Rufaufbau bzw. bei Rufannahme durchzuführen. Denkbar ist es, bei einem abgehenden Gespräch eine akustische oder optische Anzeige durch das Endgerät oder das Heimat- oder das Fremdnetz auszulösen und vor dem Rufaufbau einzuspielen. Denkbar ist ferner, bei einem eingehenden Gespräch die akustische oder optische Anzeige durch das Endgerät oder das Heimat- oder das Fremdnetz auszulösen und vor dem Rufbau einzuspielen.

Bei diesem Ausführungsbeispiel sind hinsichtlich der Vergebührung folgende Alternativen denkbar:
- Die Abrechnungseinheit wird im Heimatnetz erzeugt:
   Über Signalisierung erhält das Heimatnetz die Zellenkennung des Endgerätes bei Aufbau der Mobilfunknutzung und erzeugt damit die spezifische Abrechnungseinheit.
   Ferner ist denkbar, dass über die Abrechnungseinheiten (z.B. TAP/CDR) des Fremdnetzes inklusive der Zellenangaben pro CDR das
   Heimatnetz mit Hilfe der topographischen Datenbank die CDRs innerhalb des Teilnehmergebietes identifiziert.
- Die Abrechnungseinheit wird im Fremdnetz erzeugt:
   In diesem Fall erhält das Fremdnetz über eine Signalisierung mit dem Heimatnetz oder einen Eintrag im Fremdnetz (beispielsweise VLR) die Teilnehmerbereichs-Zellenkennungen des Endgerätes und erzeugt eine spezifische Abrechnungseinheit, die an das Heimatnetz zeitverzögert (TAP/CDR) oder sofort (z.B. CAMEL oder lP-Signalisierung) übermittelt wird

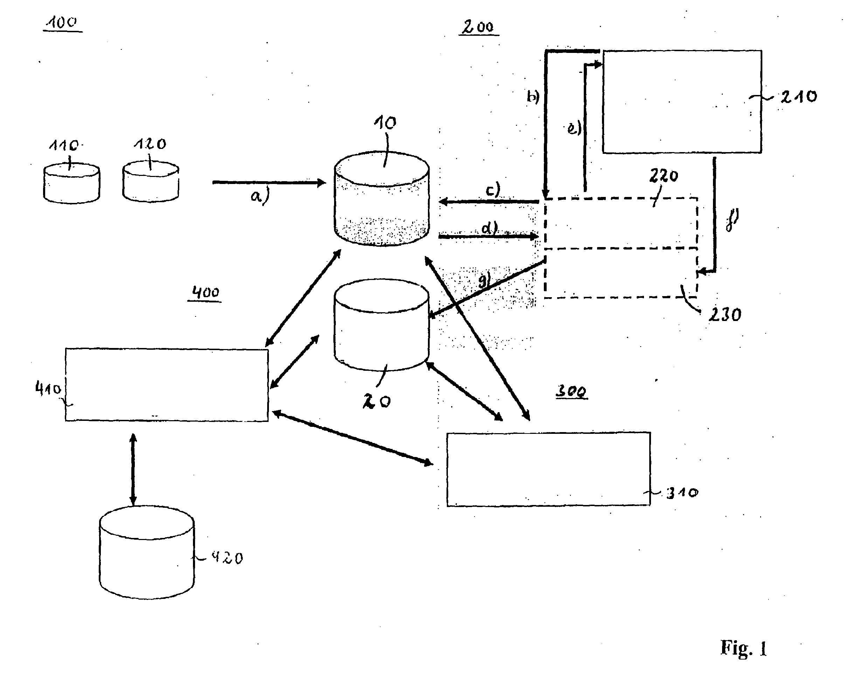

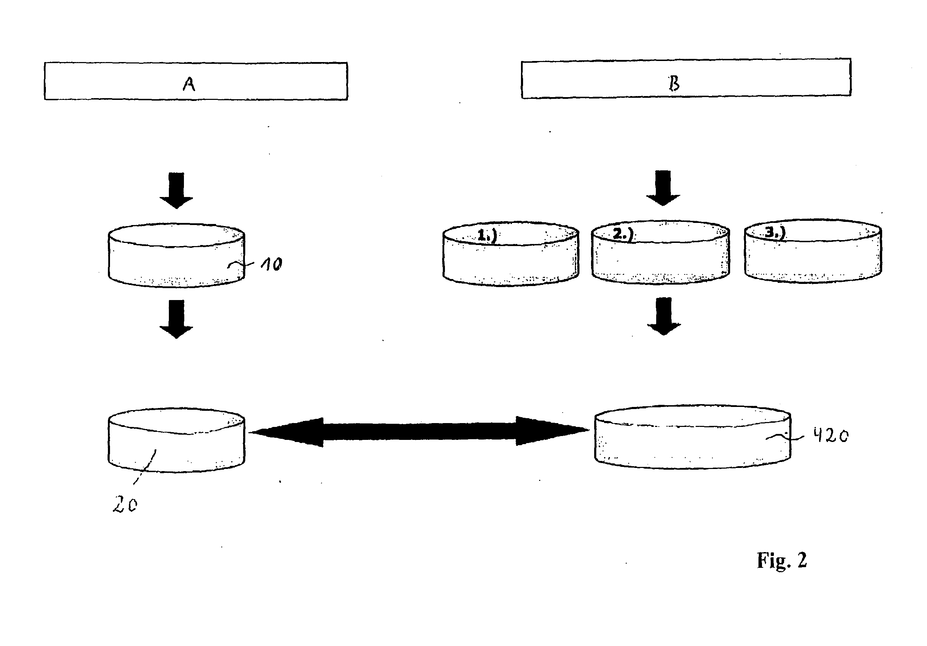

Die Figuren 1 und 2 zeigen in schematischen Darstellungen einen Überblick über mögliche Ausgestaltungen der vorliegenden Erfindung.

Fig. 1 zeigt mit dem Bezugszeichen 100 die Netztopographie des Fremdnetzes, in der eindeutige Zellinformationen bzw. die Netztopographie kennzeichnende Daten in einem einheitlichen Format und gegebenenfalls multilingual vorliegen. Abgespeichert sind Netztopographien unterschiedlicher Fremdnetzbetreiber. Die entsprechenden Speichereinheiten sind mit den Bezugszeichen 110 und 120 gekennzeichnet. Die Speicher 110, 120 stellen somit Topographiedaten-Speicher dar, in denen Verknüpfungen zwischen Ortsangaben und Zellenkennungen für unterschiedliche nationale Fremdnetze gespeichert sind. Selbstverständlich können ein, zwei oder auch mehr als zwei Topographiedaten-Speicher vorgesehen sein.

Das Bezugszeichen 10 kennzeichnet den Topographiedaten-Speicher, der aus den Speichern 110, 120 permanent aktualisiert wird (Schritt a), so dass sichergestellt ist, dass der Inhalt des Speichers 10 stets dem Speicherinhalt der Speicher 110, 120 entspricht.

Das Bezugszeichen 200 kennzeichnet den Prozess der Einrichtung eines Teilnehmergebietes für einen Kunden des Heimatnetzes. In Schritt b) fragt die Einheit 210 bei der Datenverarbeitungseinheit 220 an, welche Daten für ein bestimmtes Gebiet, beispielsweise für eine bestimmte Adresse, vorliegen. Die Einheit 210 hat die Aufgabe eine Plausibilitäts-Prüfung dahingehend vorzunehmen, ob an dem vorgegebenen Ort eine Netzabdeckung vorhanden ist. Bei den genannten, in Schritt b) abgefragten Daten kann es sich beispielsweise um die Zellkennungen der Funkzellen handeln, die in dem Gebiet eine Abdeckung liefern. In Schritt c) prüft die Datenverarbeitungseinheit 220 durch Abfrage des Topographiedaten-Speichers 10 welche Zellkennungen für das entsprechende Gebiet relevant sind. In Schritt d) erhält die Datenverarbeitungseinheit 220 von dem Topographiedaten-Speicher das entsprechende Resultat, das gemäß Schritt e) an die Einheit 210 weitergegeben wird. Bei dem Resultat handelt es sich z.B. um die Kennungen von Funkzellen des Fremdnetzes, die an dem von dem Nutzer angegebenen Ort eine Netzabdeckung liefern.

Liegt das Teilnehmergebiet teilweise in dem von einem Fremdnetz abgedeckten Bereich und teilweise in dem von dem Heimatnetz abgedeckten Bereich, werden gemäß der Schritte d) und e) Kennungen von Funkzellen des Heimat- und des Fremdnetzes übergeben.

Werden gemäß Schritt e) Kennungen von Funkzellen oder sonstige ein Teilnehmergebiet definierende Daten an die Einheit 210 übergeben, stellt die Einheit 210 fest, dass in dem kundenseitig angegebenen Gebiet eine Netzabdeckung existiert und triggert sodann den Provisionierungsprozess mittels der Einheit 230 (Schritt f).

In Schritt g) wird von der Provisionierungseinheit 230 die das Teilnehmergebiet definierende Information sowie die das mobile Endgerät bzw. die den Nutzer definierende Information an den Nutzerdaten-Speicher 20 übergeben und gleichzeitig oder zeitversetzt an die SIM-Karte des mobilen Endgerätes überreicht. In dem Speicher 20 liegt sodann beispielsweise die IMSI und/oder die MSISDN sowie Kennungen der Funkzellen vor, die das Teilnehmergebiet für diese IMSI / MSISDN definieren.

Das Bezugszeichen 300 kennzeichnet den Prozeß der Anzeige der Anwesenheit des mobilen Endgerätes in einem Teilnehmergebiet sowie der Nutzung des mobilen Endgerätes in dem Teilnehmergebiet. Die Betriebsweise (Vornahme der Anzeige, Abwicklung der Nutzung des mobilen Endgerätes) der dafür erforderlichen Einheiten wird gemeinsam durch das Bezugszeichen 310 gekennzeichnet. Denkbar ist beispielsweise, dass sich auf dem mobilen Endgerät eine Applikation befindet, die empfangene Zonenkennungen des Fremdnetzes mit den das Teilnehmergebiet definierenden Kennungen auf der SIM-Karte vergleicht und je nach Ergebnis eine Anzeige generiert. Denkbar wäre ebenfalls eine Lösung, bei der der Vergleich zwischen den Funkzellenkennungen des Teilnehmergebietes und der Kennung der Funkzelle, in der sich das mobile Endgerät tatsächlich aufhält, netzseitig, beispielsweise im Fremdnetz, erfolgt und dass das Ergebnis dieses Vergleichs sodann an das mobile Endgerät übermittelt wird.

Das Bezugszeichen 400 kennzeichnet den Komplex der Vergebührung. Das Bezugszeichen 410 kennzeichnet den in diesem Zusammenhang durchgeführten Prozess der Erstellung von Abrechnungsdatensätzen im Fremd- oder Heimatnetz und deren Übergabe an die Vergebührungseinheit 420 des Heimatnetzes. Diese hat die Aufgabe auf der Grundlage von Abrechnungsdatensätzen und der anzuwendenden Tarife entsprechende kundenbezogene Rechnungen zu erstellen.

Fig. 2 zeigt eine Möglichkeit der Festlegung eines Teilnehmergebietes über Vorwahl-Nummem sowie über geographische Gebiete des Fremdnetzes, d. h. über Location Areas, und die entsprechende Tarifierung. Location Areas werden über Location Area Codes LACs definiert. Location Areas sind Gebiete, in denen mehrere Funkzellen zusammengefaßt sind. Die LACs sind Kennzahlen, die die Location Areas eindeutig beschreiben. Gemäß Schritt A erfolgt die Einrichtung des Teilnehmergebietes mittels eines lokalen Präfixes, beispielsweise +49-89, wobei es sich um die Vorwahl-Nummer des Urlaubsortes des Kunden handeln kann. Der Kunde beantragt somit die Einrichtung eines Teilnehmergebietes im Fremdnetz mittels eines bestimmten lokalen Präfixes. Das Fremdnetz enthält den Topographiedaten-Speicher 10, der Verknüpfungen zwischen derartigen Präfixen und den LACs enthält. Auf der Grundlage dieser Verknüpfung wird / werden die LAC(s) ermittelt, die das entsprechende Gebiet abdecken. Anschließend wird/werden die entsprechende LAC(s) in das HLR oder in ein anderes System des Heimatnetzes des Nutzers eingeschrieben und in dem Nutzerdaten-Speicher 20 abgelegt.

Fig. 2, rechte Darstellung zeigt die Vergebührung B, bei der Call Data Records, d. h. Abrechnungsdatensätze einschließlich LACs in unterschiedlichen Schritten im Fremdnetz erstellt werden. Die Schritte 1 bis 3 betreffen die Übertragung der Rufinformation als Binärcode (1. MSC), die Übertragung des Binärcodes in einen Call Data Record (2. Mediation) und die Umsetzung des CDRs in eine lesbare Form (3. Clearing).

Dieser Abrechnungsdatensatz (TAP/CDR) wird sodann an die Vergebührungseinheit 420 des Heimatnetzes übermittelt und dort verarbeitet. Das Vergebührungssystem 420 des Heimatnetzes empfängt von dem Nutzerdaten-Speicher 20 des Heimatnetzes die Definition des Teilnehmergebietes für den betreffenden Nutzer. Aufgrund der LAC der Location Area, in der das Gespräch begonnen wurde, und der das Teilnehmergebiet kennzeichnenden LAC kann ein Re-Rating des Call Data Records, d. h. des Abrechnungsdatensatzes, der im Fremdnetz erstellt wurde, dahingehend vorgenommen werden, dass bei Feststellung, dass das Gespräch in dem Teilnehmergebiet begonnen wurde, ein besonders günstiger Tarif zur Anwendung kommt.

## Patentansprüche

1. Kommunikationssystem mit einem ersten Funknetz, das erste Funkstationen sowie mobile Endgeräte umfasst, die dem ersten Funknetz zugeordnet sind und die geeignet sind, um mit den ersten Funkstationen über eine Luftschnittstelle zu kommunizieren, sowie mit wenigstens einem zweiten Funknetz, das zweite Funkstationen umfasst, wobei es sich bei dem ersten Funknetz um das Heimatfunknetz (Heimatnetz) handelt, deren Kunden Nutzer der mobilen Endgeräte sind, und wobei es sich bei dem zweiten Funknetz um ein fremdes Funknetz (Fremdnetz) handelt, wobei die mobilen Endgeräte geeignet sind, um mit den zweiten Funkstationen des zweiten Funknetzes zu kommunizieren, **dadurch gekennzeichnet, dass** in dem von dem zweiten Funknetz abgedeckten Gesamtgebiet wenigstens bereichsweise zumindest ein Teilnehmergebiet existiert oder dass das von dem zweiten Funknetz abgedeckte Gesamtgebiet ein oder mehrere Teilnehmergebiete bildet, in dem die mobilen Endgeräte zu anderen Konditionen und/oder unter Nutzung anderer Dienste betreibbar sind, als wenn sie sich in dem von dem zweiten Funknetz abgedeckten Gesamtgebiet außerhalb des Teilnehmergebietes bzw. außerhalb des von dem zweiten Funknetz abdeckten Gesamtgebietes befinden.

2. Kommunikationssystem nach Anspruch 1, **dadurch gekennzeichnet, dass** es sich bei dem Heimatnetz und/oder bei dem Fremdnetz um ein Mobilfunknetz und/oder um ein WLAN handelt.

3. Kommunikationssystem nach Anspruch 1 oder 2, **dadurch gekennzeichnet, dass** das von dem Fremdnetz abgedeckte Gesamtgebiet teilweise oder vollständig innerhalb oder außerhalb des von dem Heimatnetz abgedeckten Gesamtgebietes liegt.

4. Kommunikationssystem nach einem der vorhergehenden Ansprüche, **dadurch gekennzeichnet, dass** sich das von dem Fremdnetz abgedeckte Gesamtgebiet in demselben oder in einem anderen Staat befindet wie/als das von dem Heimatnetz abgedeckte Gesamtgebiet.

5. Kommunikationssystem nach einem der vorhergehenden Ansprüche, **dadurch gekennzeichnet, dass** Mittel vorgesehen sind, durch die die Einrichtung des Teilnehmergebietes auf Aufforderung oder nach Ablauf einer bestimmten Zeitspanne aufgehoben werden kann.

6. Kommunikationssystem nach einem der vorhergehenden Ansprüche, **dadurch gekennzeichnet, dass** das oder die Teilnehmergebiete teilnehmerindividuell oder für eine Gruppe von Nutzern eingerichtet sind.

7. Kommunikationssystem nach einem der vorhergehenden Ansprüche, **dadurch gekennzeichnet, dass** das Fremdnetz Funkzellen enthält und dass das Kommunikationssystem einen Topographiedaten-Speicher umfasst, in dem eine Verknüpfung zwischen einer Ortsangabe und der Kennung einer oder mehrerer Funkzellen des Fremdnetzes oder eines Funkzellen-Bündels, das Funkzellen des Fremdnetzes umfasst, enthalten ist.

8. Kommunikationssystem nach Anspruch 7, **dadurch gekennzeichnet, dass** es sich bei dem Topographiedaten-Speicher um einen Server handelt, auf den durch den Betreiber des Heimatnetzes und/oder durch den Betreiber des Fremdnetzes zugreifbar ist.

9. Kommunikationssystem nach Anspruch 8, **dadurch gekennzeichnet, dass** es sich bei dem Zugriff um einen Lese- und/oder Schreibzugriff handelt.

10. Kommunikationssystem nach einem der Ansprüche 7 bis 9, **dadurch gekennzeichnet, dass** das Funkzellen des Fremdnetzes enthaltende Bündel durch den Betreiber des Heimatnetzes oder den Betreiber des Fremdnetzes vorgegeben ist.

11. Kommunikationssystem nach einem der vorhergehenden Ansprüche, **dadurch gekennzeichnet, dass** das Fremdnetz Funkzellen enthält und dass das Kommunikationssystem einen Nutzerdaten-Speicher umfasst, in dem Kennungen der das Teilnehmergebiet definierenden Funkzellen sowie Daten gespeichert sind, die das mobile Endgerät identifizieren, für das das Teilnehmergebiet eingerichtet wurde.

12. Kommunikationssystem nach Anspruch 11, **dadurch gekennzeichnet, dass** der Nutzerdaten-Speicher von dem Betreiber des Heimatnetzes und/oder von dem des Fremdnetzes lesbar und/oder beschreibbar ist.

13. Kommunikationssystem nach einem der vorhergehenden Ansprüche, **dadurch gekennzeichnet, dass** Mittel vorgesehen sind, mittels derer die ein Teilnehmergebiet definierenden Daten über eine Luftschnittstelle an das mobile Endgerät übertragbar sind, für das das Teilnehmergebiet eingerichtet wurde.

14. Kommunikationssystem nach einem der vorhergehenden Ansprüche, **dadurch gekennzeichnet, dass** die das Teilnehmergebiet definierenden Daten in dem mobilen Endgerät gespeichert sind, für das das Teilnehmergebiet eingerichtet wurde.

15. Kommunikationssystem nach einem der vorhergehenden Ansprüche, **dadurch gekennzeichnet, dass** das Fremdnetz Funkzellen enthält und dass Mittel zur Festlegung des Teilnehmergebietes vorgesehen sind, die derart ausgeführt sind, dass während des Aufenthaltes des mobilen Endgerätes in dem durch das Fremdnetz abgedeckten Gesamtgebiet durch das mobile Endgerät Kennungen von Funkzellen des Fremdnetzes empfangen werden und dass das Teilnehmergebiet durch diese empfangenen Kennungen definiert wird.

16. Kommunikationssystem nach einem der vorhergehenden Ansprüche, **dadurch gekennzeichnet, dass** Mittel vorgesehen sind, durch die dem Nutzer eines mobilen Endgerätes angezeigt wird, wenn sich das mobile Endgerät innerhalb oder außerhalb des Teilnehmergebietes befindet.

17. Kommunikationssystem nach einem der vorhergehenden Ansprüche, **dadurch gekennzeichnet, dass** für wenigstens einen Nutzer des Kommunikationssystems ein oder mehrere Teilnehmergebiete definiert sind, in denen das mobile Endgerät zu anderen Konditionen betreibbar ist als außerhalb des jeweiligen Teilnehmergebietes, und dass eine Priorisierung für sich überschneidende Teilnehmergebiete oder für Schnittgebiete aus Teilnehmergebieten und Nicht-Teilnehmergebieten definiert ist.

18. Kommunikationssystem nach einem der Ansprüche 7 bis 17, **dadurch gekennzeichnet, dass** der Topographiedaten-Speicher von dem Betreiber des Fremdnetzes aktualisiert wird, wenn sich die Verknüpfung zwischen Ortsangabe und Kennung der Funkzellen oder eines Bündels aus Funkzellen ändert.

19. Kommunikationssystem nach Anspruch 18, **dadurch gekennzeichnet, dass** Mittel vorgesehen sind, die bei Änderung des Inhaltes des Topographiedaten-Speichers eine entsprechende Aktualisierung des Nutzerdaten-Speichers und/oder des in dem mobilen Endgerät vorhandenen, die Definition des Teilnehmergebietes enthaltenden Speichers vornimmt, für das ein Teilnehmergebiet eingerichtet ist, das von der Änderung betroffen ist.

20. Kommunikationssystem nach einem der vorhergehenden Ansprüche, **dadurch gekennzeichnet, dass** das Kommunikationssystem Mittel zur Erstellung von Abrechnungsdatensätzen umfasst, die in dem Heimatnetz oder in dem Fremdnetz angeordnet sind.

21. Kommunikationssystem nach einem der vorhergehenden Ansprüche, **dadurch gekennzeichnet, dass** Mittel vorgesehen sind, mittels derer das Heimatnetz von dem Fremdnetz eine Kennung der Funkzelle(n) erhält, in der sich der Nutzer des mobilen Endgerätes bei Gesprächsaufbau oder zu einem Zeitpunkt des Gespräches aufgehalten hat.

22. Kommunikationssystem nach einem der vorhergehenden Ansprüche, wobei Mittel vorgesehen sind, mittels derer das Fremdnetz Abrechnungsdatensätze erstellt und diesen einen Zusatz hinzufügt, der anzeigt, ob sich der Nutzer des mobilen Endgerätes bei Gesprächsaufbau oder zu einem Zeitpunkt des Gespräches in dem Teilnehmergebiet des Fremdnetzes aufgehalten hat, das für das mobile Endgerät eingerichtet wurde.

23. Kommunikationssystem nach einem der vorhergehenden Ansprüche, **dadurch gekennzeichnet, dass** Mittel vorgesehen sind, mittels derer das Fremdnetz Abrechnungsdatensätze erstellt und diesen einen Zusatz hinzufügt, der die Kennung der Funkzelle(n) anzeigt, in der sich der Nutzer des mobilen Endgerätes zu einem Zeitpunkt des Gespräches oder bei Gesprächsaufbau aufgehalten hat.

24. Kommunikationssystem nach einem der vorhergehenden Ansprüche, **dadurch gekennzeichnet, dass** in dem Heimatnetz Prüfmittel angeordnet sind, mittels derer prüfbar ist, ob die Funkzelle(n), in denen sich der Nutzer des mobilen Endgerätes zu einem Zeitpunkt des Gespräches oder bei Gesprächsaufbau aufgehalten hat, in dem für dieses mobile Endgerät gespeicherten Teilnehmergebiet fällt.

25. Kommunikationssystem nach einem der vorhergehenden Ansprüche, **dadurch gekennzeichnet, dass** das Teilnehmergebiet vollständig in dem von dem Fremdnetz abgedeckten Gesamtgebiet oder teilweise in dem von dem Fremdnetz abgedeckten Gesamtgebiet und teilweise in dem Heimatnetz abgedeckten Gesamtgebiet liegt.
